(19) Europäisches Patentamt

European Patent Office

Office européen des brevets

(11) **EP 0 740 993 B1**

(12) **EUROPÄISCHE PATENTSCHRIFT**

(45) Veröffentlichungstag und Bekanntmachung des Hinweises auf die Patenterteilung:
**13.10.1999 Patentblatt 1999/41**

(51) Int. Cl.$^6$: **B29C 47/04**, B29C 55/02
// B29K23:00

(21) Anmeldenummer: **96106067.0**

(22) Anmeldetag: **18.04.1996**

(54) **Verfahren zur Herstellung von Polypropylenfolien**

Method for the fabrication of polypropylene films

Procédé pour la fabrication de films et polypropylène

(84) Benannte Vertragsstaaten:
**BE DE ES FR GB IT NL**

(30) Priorität: **02.05.1995 DE 19515599**

(43) Veröffentlichungstag der Anmeldung:
**06.11.1996 Patentblatt 1996/45**

(73) Patentinhaber:
**Hoechst Trespaphan GmbH**
**66539 Neunkirchen (DE)**

(72) Erfinder:
• **Peiffer, Herbert, Dr.**
 **55126 Mainz (DE)**
• **Schlögl, Gunter, Dr.**
 **65779 Kelkheim (DE)**
• **Kochem, Karl-Heinz, Dr.**
 **66386 St. Ingbert (DE)**
• **Busch, Detlef, Dipl.-Ing.**
 **66740 Saarlouis (DE)**

• **Schmidt, Robert, Dr.**
 **66424 Homburg (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 497 160          US-A- 4 348 346**
**US-A- 4 521 359          US-A- 4 975 329**

• **PATENT ABSTRACTS OF JAPAN vol. 014, no. 451 (E-0984), 27.September 1990 & JP-A-02 180023 (TOSHIBA CORP), 12.Juli 1990,**
• **PATENT ABSTRACTS OF JAPAN vol. 006, no. 033 (M-114), 27.Februar 1982 & JP-A-56 150515 (JAPAN STYRENE PAPER CO LTD), 21.November 1981,**

**Beschreibung**

Die vorliegende Erfindung betrifft ein Verfahren zur Herstellung von biaxial orientierten Polypropylenfolien, die mindestens eine Schicht umfassen, und deren Verwendung.

Biaxial orientierte (boPP-Folien) Polypropylenfolien werden aufgrund ihrer guten Gebrauchseigenschaften für viele verschiedene Verpackungsanwendungen eingesetzt. Diese guten Gebrauchseigenschaften sind beispielsweise hohe mechanische Festigkeiten, gute Dimensionsstabilität und eine brillante Optik. Neben dem Einsatz als Verpackungsfolien werden boPP-Folien in beträchtlichen Mengen in technischen Anwendungen verwendet. Zu nennen sind die Metallisierung und die Transfermetallisierung, die Kaschierung und die Verwendung als Elektroisolationsfolie bei der Kondensatorherstellung.

Im Stand der Technik sind verschiedene Verfahren zur Herstellung von biaxial orientierten Polypropylenfolien bekannt. Beim sogenannten Stenterprozeß wird die boPP-Folie durch Extrusion, Ausformung in einer Breitschlitzdüse und durch Streckung in Längs- und Querrichtung hergestellt.

Im einzelnen wird bei diesem Verfahren so vorgegangen, daß die Propylenpolymeren in einem Extruder komprimiert, erwärmt und aufgeschmolzen werden, anschließend die den einzelnen Schichten der Folie entsprechenden Schmelzen durch eine Flachdüse extrudiert werden, die so erhaltene Folie zur Verfestigung auf einer oder mehreren Walzen abgezogen wird, die Folie orientiert und anschließend thermofixiert wird. Abschließend wird die so hergestellte Maschinenrolle zur kundenfertigen Schnittrolle konfektioniert.

Bei dieser Herstellung von biaxial orientierten Folien entsteht prozeßbedingt eine große Menge an Folienverschnitt, beispielsweise durch den sogenannten Säumstreifen. Säumstreifen sind Folienränder, welche bei der Querstreckung von den Kluppen des Querstreckrahmens ergriffen, aber nicht mitverstreckt werden. Der unverstreckte Rand ist nach der Orientierung wesentlich dicker als die Folie und muß daher abgeschnitten werden. Je nach Folientyp und je nach Maschinenbreite kann der Materialverlust durch den Säumstreifen bis zu 25 Gew.-% betragen. Aus wirtschaftlichen Gründen ist es erforderlich, den Säumstreifen zusammen mit dem übrigen Folienverschnitt, welcher beim Konfektionieren, bei Abrissen oder beim An- und Ausfahren der Maschine entsteht, zu Regranulat zu verarbeiten und dem Originalrohstoff wieder zuzusetzen.

In einigen Anwendungsbereichen mit besonders hohen Qualitätsanforderungen ist eine derartige Wiederverwertung von Folienverschnitt mit dem Originalrohstoff nicht möglich. Dies gilt beispielsweise bei der Herstellung von Elektroisolationsfolien, die bei der Herstellung von Kondensatoren eingesetzt werden. Für diese Anwendungen werden besondere Folieneigenschaften wie beispielsweise ein geringer dielektrischer Verlustfaktor, ein hoher elektrischer Durchgangswiderstand, eine hohe Gleich- und Wechselspannungsfestigkeit sowie eine möglichst geringe Anzahl von Fehlstellen gefordert. Diese Eigenschaften werden unter anderem durch den Einsatz eines besonders reinen Polypropylens mit niedrigem Asche- und Chlorgehalt erreicht. Daneben dürfen die Polymeren keine ionogenen Bestandteile haben. Es hat sich erwiesen, daß diese hohen Qualitätsanforderungen bei Zusatz von Folienverschnitt zu dem hochreinen Rohstoff nicht mehr erfüllt werden. Das bedeutet, daß der Folienverschnitt bei der Herstellung von Elektrofolien de facto zum Abfall wird, der nur noch in minderwertigen Anwendungen, beispielsweise bei der Herstellung von Verpackungsfolien oder Spritzguß, verwendet werden kann. Folglich sind die wirtschaftlichen Verluste durch Folienverschnitt bei der Herstellung von Elektrofolien besonders ausgeprägt.

Die Aufgabe der vorliegenden Erfindung bestand daher darin, ein Verfahren zur Herstellung von Folien aus hochwertigem, d. h. reinem Polypropylen, anzugeben, welches die oben geschilderten Nachteile vermeidet. Das Verfahren soll insbesondere die wirtschaftlichen Verluste durch nicht wiederverwertbare Folienverschnitte vermindern.

Diese Aufgabe wird durch ein Verfahren der eingangs genannten Gattung gelöst, bei welchem ein Propylenpolymer B in einem Extruder erwärmt wird und die Schmelze des Propylenpolymeren B durch eine Flachdüse extrudiert wird und die aus der Flachdüse tretende Schmelze auf einer oder mehreren Walzen abgezogen und zur Vorfolie verfestigt wird und diese Vorfolie in Längs- und Querrichtung gestreckt wird, dadurch gekennzeichnet, daß

   1. in einem zweiten Extruder ein Propylenpolymer oder eine Propylenpolymermischung A erwärmt und aufgeschmolzen wird und
   2. die Schmelze des Propylenpolymeren oder der Propylenpolymermischung A so an die beiden Seiten der Propylenpolymerschmelze B geführt wird, daß beide Schmelzen gemeinsam und gleichzeitig durch die Flachdüse extrudiert werden und das Propylenpolymer oder die Propylenpolymermischung A den Randbereich der Folie während des Herstellungsprozesses bildet, und
   3. die Randbereiche aus dem Propylenpolymeren oder der Propylenpolymermischung A nach der Längs- und Querstreckung der Folie abgeschnitten werden.

Erfindungsgemäß sind die Propylenpolymeren bzw. die entsprechenden Mischungen bezüglich ihres Restasche- und Chlorgehalts verschieden, weshalb sie als Polymer B und A bezeichnet werden. Der Restasche- und der Chlorgehalt des Propylenpolymeren A sind im allgemeinen mindestens doppelt so groß, vorzugsweise mindestens dreimal so groß, insbesondere mindestens fünfmal so groß wie der Restaschegehalt des Propylenpolymeren B. Dies bedeutet, daß das Propylenpolymer B ein hochwertigeres und damit teureres Polymer ist als das Propylenpolymer A.

Das Propylenpolymer B ist ein hochreines Polymer. Dies bedeutet im Sinne der vorliegenden Erfindung, daß der Restaschegehalt des Propylenpolymeren B kleiner oder gleich 70 ppm, vorzugsweise ≤ 50 ppm, insbesondere ≤ 40 ppm, und der Chlorgehalt kleiner oder gleich 50 ppm, vorzugsweise ≤ 20 ppm, ist.

Das Propylenpolymere B enthält im allgemeinen 90 bis 100 Gew.-%, vorzugsweise 95 bis 100 Gew.-%, insbesondere 98 bis 100 Gew.-%, Propyleneinheiten, bezogen auf das Gewicht des Polymeren. Im allgemeinen hat das Polypropylen B einen Schmelzpunkt von 130°C oder höher, vorzugsweise 140 bis 170°C, und einen Schmelzflußindex von 0,5 g/10 min bis 10 g/10 min, vorzugsweise 0,8 g/10 min bis 5 g/10 min, gemessen bei 230 °C und einer Kraft von 21,6 N (DIN 53 735).

Besonders geeignete Propylenpolymere B haben ein mittleres Molekulargewicht $M_w$ im Bereich von 150 000 bis 400 000, vorzugsweise von 180 000 bis 350 000. Die Molekulargewichtsverteilung kann in breiten Grenzen variieren, $M_w/M_n$ beträgt im allgemeinen 2 bis 15, vorzugsweise 2 bis 6, insbesondere 3 bis 6.

Unter den vorstehend beschriebenen Propylenpolymeren B ist isotaktisches Propylenhomopolymer mit einem n-heptanlöslichen Anteil von 1 bis 15 Gew.-%, vorzugsweise 1 bis 10 Gew.-%, und mit einem Kettenisotaxieindex des n-heptanunlöslichen Anteils von ≥ 85 %, vorzugsweise ≥ 90 %, besonders bevorzugt. Des weiteren sind Copolymere von Ethylen und Propylen mit einem Ethylengehalt von 10 Gew.-% oder weniger, Copolymere von Propylen mit $C_4$-$C_6$-Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger geeignet. Die angegebenen Gewichtsprozente beziehen sich auf das jeweilige Propylenpolymere B.

Um bestimmte Eigenschaften der erfindungsgemäßen Polypropylenfolie zu verbessern, werden dem Propylenpolymeren B im allgemeinen Stabilisatoren und/oder Neutralisationsmittel und gegebenenfalls Nukleierungsmittel zugesetzt. Im Hinblick auf die gewünschten elektrischen Eigenschaften der Folie sollte dem Propylenpolymeren B in einer bevorzugten Ausführungsform kein Antistatikum und kein Gleitmittel zugefügt werden, da diese Zusatzstoffe die elektrischen Eigenschaften der Folie verschlechtern. Alle Mengenangaben in der folgenden Ausführung in Gewichtsprozent (Gew.-%) beziehen sich jeweils auf die Schicht oder Schichten, der oder denen das Additiv zugesetzt sein kann.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-trimehtyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2$/g. Im allgemeinen wird das Neutralisationsmittel in einer Menge von 0,02 bis 0,5 Gew.-% zugesetzt.

Nukleierungsmittel können organische Substanzen sein, vorzugsweise Dibenzylidensorbitol oder chemisch modifizierte Derivate des Dibenzylidensorbitols oder Natrium-Bis-(4-tert.-butylphenyl)phosphat. Weitere einsetzbare Nukleierungsmittel sind beispielsweise Metallsalze der Benzoesäure, vorzugsweise Natriumbenzoat, sowie Chinacridon und Chinacridonderivate. Auch anorganische Nukleierungsmittel wie beispielsweise Talkum, Siliziumdioxid oder Bentonit sind geeignet. Hierbei kommt es vor allem auf eine extrem feine Verteilung des Nukleierungsmittels an, d. h. die mittlere Teilchengröße beträgt maximal 1 μm, vorzugsweise maximal 0,7 μm.

Erfindungsgemäß ist das Propylenpolymere A bezüglich seines Restaschegehalts verschieden vom Propylenpolymeren B. Es ist wie vorstehend erläutert kein hochreines Polymer. Der Restaschegehalt des Propylenpolymeren A liegt im allgemeinen im Bereich von 50 bis 800 ppm, vorzugsweise 100 bis 600 ppm, insbesondere 200 bis 500 ppm. Der Chlorgehalt beträgt 20 bis 100 ppm, vorzugsweise 30 bis 70 ppm.

Das Propylenpolymere A enthält im allgemeinen 90 bis 100 Gew.-%, vorzugsweise 95 bis 100 Gew.-%, insbesondere 98 bis 100 Gew.-%, Propyleneinheiten, bezogen auf das Gewicht des Polymeren. Im allgemeinen hat das Propylenpolymere A einen Schmelzpunkt von 130°C oder höher, vorzugsweise 140 bis 170°C, und einen Schmelzflußindex von 0,3 g/10 min bis 15 g/10 min, gemessen bei 230 °C und einer Kraft von 21,6 N (DIN 53 735).

Besonders geeignete Propylenpolymere A haben ein mittleres Molekulargewicht $M_w$ im Bereich von 150 000 bis 400 000, vorzugsweise von 180 000 bis 350 000. Die Molekulargewichtsverteilung der bevorzugten Propylenpolymeren A kann in breiten Grenzen variieren. $M_w/M_n$ beträgt im allgemeinen 2 bis 15, vorzugsweise 2 bis 6, insbesondere 3 bis 5.

Die bevorzugten engen Molekulargewichtsverteilungen lassen sich beispielsweise durch einen peroxidischen Abbau des Propylenpolymeren A erreichen. Ein Maß für den Grad des Abbaus ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymers vor dem Zusatz des organischen Peroxids

$MFI_2$ = Schmelzflußindex des peroxidisch abgebauten Propylenpolymeren

Der Abbaufaktor des Propylenpolymeren A beträgt 3 bis 15, vorzugsweise 6 bis 10. Der peroxidische Abbau erfolgt vorteilhaft durch den Zusatz von organischen Peroxiden. Als organische Peroxide sind Dialkylperoxide besonders bevorzugt, wobei unter einem Alkylrest die üblichen gesättigten, geradekettigen oder verzweigten niederen Alkylreste mit bis zu sechs Kohlenstoffatomen verstanden werden, insbesondere sind 2,5-Dimethyl-2,5-di(t-butylperoxy)-hexan oder Di-t-butylperoxid bevorzugt.

Unter den vorstehend beschriebenen Propylenpolymeren A ist isotaktisches Propylenhomopolymer mit einem n-heptanlöslichen Anteil von 1 bis 15 Gew.-%, vorzugsweise 1 bis 10 Gew.-%, und mit einem Kettenisotaxieindex des n-heptanunlöslichen Anteils von ≥85 %, vorzugsweise ≥90 %, besonders bevorzugt. Des weiteren sind Copolymere von Ethylen und Propylen mit einem Ethylengehalt von 10 Gew.-% oder weniger, Copolymere von Propylen mit $C_4$-$C_8$-Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger geeignet. Die angegebenen Gewichtsprozente beziehen sich auf das jeweilige Propylenpolymere.

Des weiteren ist eine Mischung aus den genannten Propylenhomo- und/oder - copolymeren und/oder -terpolymeren und anderen Polyolefinen geeignet. Die Mischung enthält mindestens 50 Gew.-%, insbesondere mindestens 75 Gew.-%, des vorstehend beschriebenen Propylenpolymerisats A. Geeignete andere Polyolefine in der Propylenpolymermischung sind beispielsweise Polyethylene, wobei der Anteil dieser Polyolefine im Bereich von 5 bis 60 Gew.-%, vorzugsweise 10 bis 40 Gew.-%, bezogen auf die Propylenpolymermischung A, liegt.

Gegebenenfalls können dem Propylenpolymeren A oder der Propylenpolymermischung A Additive in einer jeweils wirksamen Menge zugesetzt werden, bevorzugte Additive sind Neutralisationsmittel und/oder Stabilisatoren. Gegebenenfalls können auch Antistatika und/oder Gleitmittel enthalten sein. Es sind jedoch bevorzugt keine derartigen migrierfähigen Additive zuzusetzen, da diese durch Ausdampfungen den Rahmen und andere Teile der Produktionsanlage verschmutzen können. Diese Verunreinigungen lösen sich vom Rahmen und können auf die Folie heruntertropfen.

Art und Menge der Neutralisationsmittel und der Stabilisatoren wurden vorstehend für das Propylenpolymere B beschrieben. Diese Angaben gelten für das Propylenpolymere A in gleicher Weise.

Es wurde gefunden, daß die Randbereiche, d. h. die Säumstreifen, aus dem Propylenpolymeren A mit der eigentlichen Folie aus dem Propylenpolymeren B besonders fest verbunden sind, wenn die Schmelzpunkte der beiden Polymeren in etwa gleich groß sind, d. h. sie sollten sich vorteilhafterweise um nicht mehr als 15°C, vorzugsweise um nicht mehr als 10°C, unterscheiden oder in etwa gleich groß sein. Weiterhin sind im allgemeinen die Schmelzflußindices (MFI) der beiden Rohstoffe aufeinander abzustimmen, damit die Säumstreifen und die Folie besonders fest miteinander verbunden sind. Der MFI des Propylenpolymeren A sollte vorzugsweise maximal das dreifache des MFI des Propylenpolymeren B betragen. Gegebenenfalls können die Schmelzindices der beiden Polymeren gleich groß sein, oder der MFI des Propylenpolymeren A kann etwas kleiner als der des Propylenpolymeren B sein.

Es wurde gefunden, daß bei gleichbleibender Düseneinstellung die Dicke des Folienrands über den MFI des Polymeren A gezielt variiert bzw. eingestellt werden kann, ohne daß sich die Dicke der Folie selbst ändert. Je größer der MFI des Polymeren A im Verhältnis zum MFI des Polymeren B ist, umso dicker wird der Randbereich und umgekehrt. Auf diese Weise kann die Säumstreifendicke unabhängig von der herzustellenden Folie optimiert werden. Dies ist bei der Herstellung von sehr dünnen Folien besonders vorteilhaft. Hierbei muß nach dem herkömmlichen Verfahren die Düse im Randbereich vergleichsweise sehr weit geöffnet werden, um die ausreichende Dicke des Säumstreifens zu gewährleisten. Hierbei besteht die Gefahr, daß die Düsenlippen irreversibel verbogen werden. Nach dem erfindungsgemäßen Verfahren sind derartige extreme Düseneinstellungen bei der Herstellung von sehr dünnen Folien nicht mehr notwendig.

Nach dem erfindungsgemäßen Verfahren können einschichtige oder mehrschichtige Folien hergestellt werden. Mehrschichtige Polypropylenfolien umfassen mindestens eine, gegebenenfalls beidseitige, Deckschicht/en, welche im allgemeinen 75 bis 100 Gew.-%, vorzugsweise 90 bis 99,5 Gew.-%, jeweils bezogen auf das Gewicht der Deckschicht, Polymere aus Olefinen mit 2 bis 10 Kohlenstoffatomen enthält/enthalten.

Beispiele für derartige olefinische Polymere sind

ein Propylenhomopolymer oder
ein Copolymer von

Ethylen und Propylen oder

Ethylen und Butylen-1 oder

Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und
Terpolymeren, gegebenenfalls gemischt mit einem oder mehreren der genannten Homo-, Co- und Terpolymeren,
wobei insbesondere Propylenhomopolymer oder
statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,

jeweils bezogen auf das Gesamtgewicht des Polymerblends, bevorzugt sind.

Das in der Deckschicht eingesetzte Propylenhomopolymere enthält zum überwiegenden Teil (mindestens 90 %) Propylen und besitzt einen Schmelzpunkt von 140°C oder höher, vorzugsweise 150 bis 170°C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,0 g/10 min bis 20 g/10 min, vorzugsweise 2,0 g/10 min bis 15 g/10 min.

Die in der Deckschicht eingesetzten vorstehend beschriebenen Copolymeren, Terpolymeren und Blends aus Co- und Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 150°C. Der vorstehend angegebene Schmelzflußindex wird bei 230°C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein. Der Abbaufaktor für die Deckschichtpolymeren liegt im allgemeinen in einem Bereich von 3 bis 15, vorzugsweise 6 bis 10.

Mehrschichtige Ausführungsformen von Folien, die nach dem erfindungsgemässen Verfahren hergestellt werden, umfassen mindestens eine Basisschicht, welche im wesentlichen aus dem hochreinen Propylenpolymeren B besteht, und die vorstehend beschriebene Deckschicht. Die Basisschicht kann auch beidseitig Deckschichten und gegebenenfalls zusätzliche Zwischenschichten aufweisen. Die Basisschicht ist im Sinne der vorliegenden Erfindung diejenige Schicht, welche mehr als 50 bis 100 %, vorzugsweise 70 bis 95 %, der Gesamtfoliendicke ausmacht. Die Deckschicht ist die Schicht, welche die äußerste Schicht der Folie bildet.

Die Gesamtdicke der Folien, die nach dem erfindungsgemäßen Verfahren herstellbar sind, kann innerhalb weiter Grenzen variieren und richtet sich nach dem beabsichtigten Verwendungszweck. Die bevorzugten Ausführungsformen der Folie haben Gesamtdicken von 2 bis 100 μm, wobei 2 bis 50 μm, insbesondere 2 bis 20 μm, bevorzugt sind. Die Dicke der gegebenenfalls vorhandenen Zwischenschicht/en beträgt 0,5 bis 15 μm, wobei Zwischenschichtdicken von 1 bis 10 μm, insbesondere 2 bis 8 μm, bevorzugt sind. Die Dicke der Deckschicht/en wird unabhängig von anderen Schichten gewählt und liegt bevorzugt im Bereich von 0,1 bis 10 μm, insbesondere 0,2 bis 5 μm, vorzugsweise 0,3 bis

2 μm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke variieren.

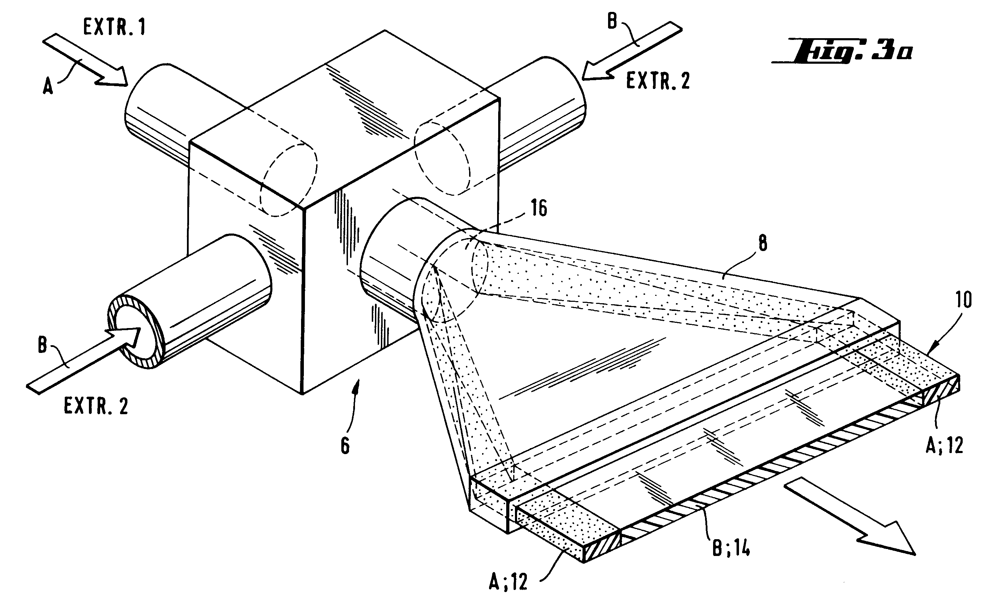

Im Rahmen des erfindungsgemäßen Verfahrens wird das Propylenpolymere B zunächst in einem Hauptextruder (EXTR. 1) komprimiert, erwärmt und geschmolzen. In einem zweiten Extruder (EXTR. 2) wird das Propylenpolymer oder die Propylenpolymermischung A ebenfalls komprimiert, erwärmt und geschmolzen. Die Schmelze des Propylenpolymeren oder der Propylenpolymermischung A wird so an die beiden Seiten der Propylenpolymerenschmelze B geführt, daß die beiden Schmelzen gemeinsam und gleichzeitig durch die Flachdüse extrudiert werden und das Propylenpolymere oder die Propylenpolymermischung A den Randbereich der Folie während des Herstellungsprozesses bildet. Die Führung der Polymerschmelze A an den Rand der Schmelze B kann beispielsweise wie in Figur 3 dargestellt mit einem um 90° gedrehten Coextrusionsadapter erfolgen.

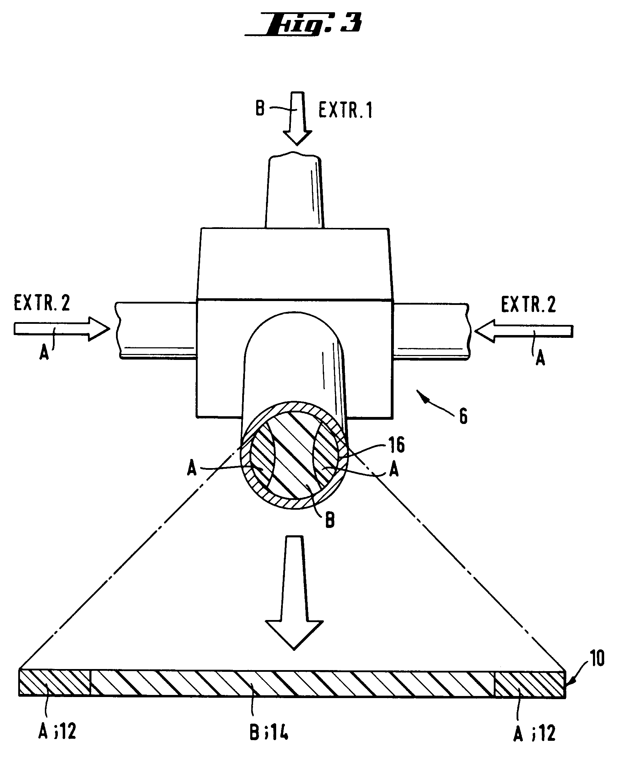

Figur 2 zeigt zum Vergleich den herkömmlichen Einsatz des Standardadapters zur Herstellung einer coextrudierten dreischichtigen Folie. Die Zuführungen der Polymerschmelzen erfolgt analog über zwei Extruder (EXTR. 1 und EXTR. 2). Die Schmelzeströme werden wie dargestellt (16) übereinandergelegt. In der Düse wird die dreischichtige Schmelze zur Mehrschichtfolie (ABA) ausgeformt.

Demgegenüber stellen Figuren 3 und 3A die Verwendung des Coextrusionsadapters 6 in einer um 90° gedrehten Anordnung (90° gegenüber Figur 2) gemäß dem erfindungsgemäßen Verfahren dar. Das Komprimieren, Erwärmen und Schmelzen der Polymeren sowie die Zuführung der Schmelzeströme A, B erfolgt analog. Die Schmelzeströme A, B werden jedoch wie dargestellt (16) nebeneinandergelegt. In der Breitschlitzdüse 8 werden die nebeneinandergelegten Schmelzen zu einer Folie 10 ausgeformt, deren Randbereiche (12) aus dem Polymeren A (aus dem Schmelzestrom des Extruders 2) aufgebaut sind. Die eigentliche Folie (14) besteht aus dem Polymeren B (aus dem Schmelzestrom des Extruders 1).

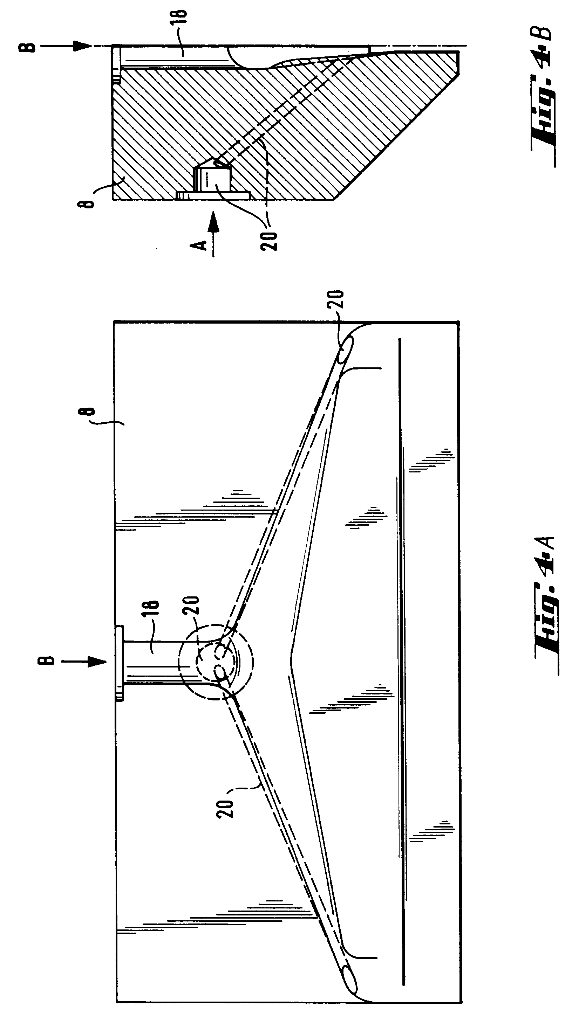

Für das erfindungsgemäße Verfahren ist auch eine Monodüse geeignet, bei welcher die Schmelze A seitlich eingespritzt wird (sogenannte Öhrchendüse). Den prinzipiellen Aufbau einer Öhrchendüse zeigt Figur 4A und B. Die Breitschlitzdüse 8 weist links und rechts des Hauptkanals 18 je eine Bohrung 20 auf. Die Schmelze B wird durch den Hauptkanal 18 in den mittleren Teil der Düse geführt. Die Schmelze A strömt über die Bohrungen 20 in die beiden Randbereiche der Düse ein. Auf diese Weise werden die Schmelzen A und B nebeneinanderliegend zu einer Folie ausgeformt, deren Randbereiche aus dem Polymeren A bestehen.

Die so extrudierte Folie wird zur Verfestigung auf einer oder mehreren Walze/n abgezogen. Es hat sich als besonders günstig erwiesen, die Abzugswalze oder - walzen, durch die die ausgepreßte Folie verfestigt wird, bei einer Temperatur von mindestens 70°C zu halten, bevorzugt 80 bis 120°C.

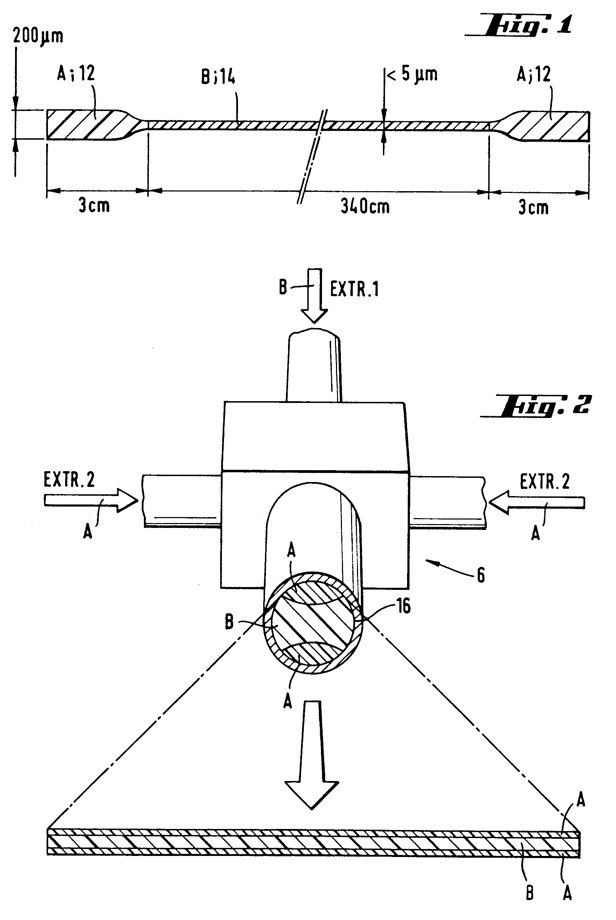

Die so erhaltene Vorfolie wird längs und quer zur Extrusionsrichtung gestreckt, was zu einer biaxialen Orientierung der Molekülketten führt. Die biaxiale Orientierung wird aufeinanderfolgend durchgeführt, wobei vorzugsweise zuerst längs (in Maschinenrichtung) und dann quer (senkrecht zur Maschinenrichtung) gestreckt wird. In Längsrichtung wird vorzugsweise um 4:1 bis 9:1, insbesondere 5,5 :1 bis 8,5:1, und in Querrichtung vorzugsweise um 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Kluppen ergreifen den Randbereich der Folie, so daß im wesentlichen nur das Polymere B zu einer dünnen Folie verstreckt wird (14) und die Ränder (12) aus dem Polymeren A unverstreckt und dick bleibt. Eine entsprechende schematische Darstellung zeigt Figur 1.

Die Temperaturen, bei denen die Längs- und die Querstreckung durchgeführt werden, können in einem großen Bereich variieren und richten sich nach der jeweiligen Zusammensetzung der Schichten und nach den gewünschten Eigenschaften der Folie. Im allgemeinen wird die Längsstreckung bei 80 bis 160°C, vorzugsweise 100 bis 160°C, und die Querstreckung bei 120 bis 170°C, vorzugsweise 130 bis 160°C, durchgeführt.

An die biaxiale Streckung der Folie schließt sich ihre Thermofixierung (Wärmebehandlung) an, wobei die Folie etwa 0,1 bis 10 s lang bei einer Temperatur von 100 bis 160°C, vorzugsweise 110 bis 130°C, gehalten wird.

Bevorzugt wird/werden wie oben erwähnt nach der biaxialen Streckung eine oder beide Oberfläche/n der Folie nach einer der bekannten Methoden corona-oder flammbehandelt werden. Die Behandlungsintensitäten liegen im üblichen Rahmen, wobei 35 bis 50 mN/m, vorzugsweise 36 bis 45 mN/m, sind.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Nach der Oberflächenbehandlung oder nach der Thermofixierung wird die Folie mit üblichen Schneidvorrichtungen gesäumt, und die Folie selbst wird mit einer an sich bekannten Aufwickeleinrichtung aufgewickelt. Im allgemeinen beträgt die Breite des zu säumenden Randes bis zu 300 mm, vorzugsweise 100 bis 200 mm, und besteht zu mindestens 30 Gew.-%, vorzugsweise 50 bis 100 Gew.-%, insbesondere 70 bis 90 Gew.-%, aus den Propylenpolymeren A. Bei üblichen Herstellungsverfahren hat der Folienrand eine Dicke von bis zu 200 µm, im allgemeinen von 20 bis 100 µm, vorzugsweise 20 bis 50 µm. Je nach Gegebenheiten können auch Randdicken darüber oder darunter geeignet sein. Zweckmäßigerweise werden die gesamten abgeschnittenen (gesäumten) Randbereiche geheckselt, granuliert und können dann als Regranulat bei der Herstellung von Verpackungsfolie verwendet werden. Durch geeignete Wahl des Randstreifenpolymeren A läßt sich das Regranulat, welches später wiederverwendet werden soll, spezifisch auf diesen Wiederverwendungszweck einstellen. Dies war bei den herkömmlichen Verfahren nicht möglich.

Die Erfindung wird nun anhand von Ausführungsbeispielen näher erläutert:

Beispiel 1

Es wurde durch Coextrusion und durch anschließende stufenweise Orientierung in Längs- und Querrichtung eine transparente Folie mit einer Dicke von 6 µm hergestellt. Die hergestellte Folie ist einschichtig. Zur Herstellung der nebeneinanderliegenden Schmelzen "Säumstreifen-Folie-Säumstreifen" wurde die Adaptertechnik verwendet. Die übliche Adapteranordnung ist dabei um 90° gedreht.

A-Originalpolymer:

100 Gew.-%   isotaktisches Polypropylen der Fa. Borealis mit dem Markennamen ®VB 2142 E, Schmelzindex = 2,2 g/10 min

B-Säumstreifenpolymer:

100 Gew.-%   isotaktisches Polypropylen der Fa. Hoechst mit dem Markennamen ®Hostalen PPN 1060, Schmelzindex = 3,0 g/10 min

Die Herstellungsbedingungen in den einzelnen Verfahrensschritten sind:

| Extrusion: | Temperatur: | A-Schicht | 280°C |
| | | B-Schichten | 280°C |
| | Temperaturen der Abzugswalze | | 90°C |
| Längsstrek-kung: | Temperatur | | 150°C |
| | Längsstreckenverhältnis | | 5,5 |
| Querstreckung: | Temperatur | | 160°C |
| | Querstreckenverhältnis | | 9,5 |
| Fixierung: | Temperatur | | 140°C |
| | Konvergenz | | 15 % |

Beispiel 2

Im Vergleich zu Beispiel 1 erfolgte die Anordnung und Ausformung der Schmelzen über eine sogenannte Öhrchendüse (vgl. Figur 4A, 4B).

Zur Charakterisierung der Rohstoffe und der Folien wurden die folgenden Meßmethoden benutzt:

Schmelzflußindex:

Der Schmelzflußindex wurde in Anlehnung an DIN 53 735 bei 21,6 N Belastung und 230°C gemessen.

Schmelzpunkt:

DSC-Messung, Maximum der Schmelzkurve, Aufheizgeschwindigkeit 20°C/min.

Kristallinität:

Die Kristallinität wurde mit Hilfe röntgenographischer Methoden bestimmt. Hierbei wurden die korrigierten gebeugten Röntgen-Intensitäten den Anteilen der amorphen und kristallinen Phasen proportional gesetzt.

Glastemperatur:

Die Proben wurden mit Hilfe der DSC (Differential-Scanning-Calorimetry) untersucht. Die Aufheizgeschwindigkeit betrug 20 K/min. Um die thermische Vorgeschichte in der Probe zu eliminieren, wurde die Probe im DSC-Geräte zunächst über die Glastemperatur $T_G$ erhitzt, rasch abgekühlt und dann erneut erhitzt (zweites Aufheizen). Aus dem Thermogramm für das zweite Aufheizen wurde die Temperatur für den Glasübergang als halbe Stufenhöhe entnommen.

Vicat-Erweichungstemperatur:

Die Vicat-Erweichungstemperatur VST/B/120 wurde nach 150 306, DIN 53 460, gemessen.

Restaschegehalt:

Zur Messung des Restaschegehalts wird der Anteil der nicht verbrennbaren mineralischen Füllstoffe quantitativ bestimmt. Der Restaschegehalt (Glühverlust) errechnet sich aus dem Ausgangsgewicht der Probe und dem Glührückstand. Das Meßergebnis wird in ppm angegeben. Aus dem zu prüfenden Material (Granulat, Regenerat usw.) wird eine repräsentative Stichprobe von ca. 1 kg entnommen. Das Material muß sauber und vollkommen trocken sein; eventuell ist ein Vortrocknen bei ca. 80°C im Umluftwärmeschrank erforderlich. Drei leere Porzellantiegel werden mindestens 1 h lang bei einer Temperatur von 650°C im Tiegelofen geglüht und nach Abkühlung im Exsikkator auf Raumtemperatur auf 0,1 mg Genauigkeit gewogen. Das Glühen wird wiederholt, bis zwischen zwei aufeinanderfolgenden Wägungen Gewichtskonstanz erreicht ist. Danach wird in jeden Tiegel 50 g ($\pm$0,1 g) Material eingewogen und in den 650°C heißen Muffelofen gegeben. Die Temperatur im Ofen wird jetzt auf 1 000°C hochgefahren und bei dieser Temperatur mindestens 1 h geglüht. Nach Abkühlung der Tiegel im Exsikkator werden diese auf 0,1 mg Genauigkeit ausgewogen. Der Aschegehalt wird in Maßeinheit ppm (parts per million) = mg/m$^3$ angegeben. Alle drei Tiegel werden nach der folgenden Formel ausgewertet, und die beiden am wenigsten differierenden Werte zu einem Mittelwert zusammengefaßt:

$$ppm = \frac{Auswaage\ (g)}{Einwaage\ (g)}\ x\ 1\ 000\ 000$$

Chlorgehalt:

Der Chlorgehalt in Polyolefinen wird quantitativ mittels Röntgen-Fluoreszenz-Analyse (RFA) nach DIN 51 001, Teil 1, gemessen. Es wird eine Tablette aus Granulat/Pulver gepreßt, die mit der RFA gegen eine Kalibrierkurve vermessen wird. Die Kalibrierkurve wurde mit Hilfe von 10 Kalibrierproben aufgestellt, in denen der Chlorgehalt nach einer unabhängigen Methode (naßtechnisch) bestimmt wurde.

Molekulargewichtsbestimmung:

Zur Bestimmung des mittleren Molekulargewichts $M_w$ wird die Drei-Detektor-Gelpermeationschromographie verwendet. Die Substanz wird in einem Laufmittel wie THF aufgelöst und über eine Trennsäule gegeben. Die Trennsäule ist 90 cm lang und mit einem porösen Trägermaterial gefüllt, dessen Porengröße 5 $\mu$m beträgt. Die Detektion erfolgt mittels UV-Absorptionsspektroskopie bei verschiedenen Wellenlängen sowie mittels Brechungsindex und Lichtstreuvermögen der Fraktionen. Die Eichung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte (DIN 55 672 Teil 1).

**Patentansprüche**

1. Verfahren zur Herstellung von biaxial orientierten Polypropylenfolien, die mindestens eine Schicht umfassen, bei welchem ein Propylenpolymer B in einem Extruder erwärmt wird und die Schmelze des Propylenpolymeren B durch eine Flachdüse extrudiert wird und die aus der Flachdüse tretende Schmelze auf einer oder mehreren Walzen abgezogen und zur Vorfolie verfestigt wird und diese Vorfolie in Längs- und Querrichtung gestreckt wird, dadurch gekennzeichnet, daß

   1. in einem zweiten Extruder ein Propylenpolymer oder eine Propylenpolymermischung A erwärmt und aufgeschmolzen wird und
   2. die Schmelze des Propylenpolymeren oder der Propylenpolymermischung A so an die beiden Seiten der Propylenpolymerschmelze B geführt wird, daß beide Schmelzen gemeinsam und gleichzeitig durch die Flachdüse extrudiert werden und das Propylenpolymer oder die Propylenpolymermischung A den Randbereich der Folie während des Herstellungsprozesses bildet, und
   3. die Randbereiche aus dem Propylenpolymeren oder der Propylenpolymermischung A nach der Längs- und Querstreckung der Folie abgeschnitten werden.

2. Verfahren nach Anspruch 1, dadurch gekennzeichnet, daß das Propylenpolymer B und das Propylenpolymer oder die Propylenpolymermischung A bezüglich ihres Restaschegehalts verschieden sind.

3. Verfahren nach Anspruch 1 und/oder 2, dadurch gekennzeichnet, daß der Restaschegehalt des Propylenpolymeren oder der Propylenpolymermischung A mindestens doppelt so groß, vorzugsweise mindestens dreimal so groß, wie der Restaschegehalt der Propylenpolymeren B ist.

4. Verfahren nach einem oder mehreren der Ansprüche 1 bis 3, dadurch gekennzeichnet, daß das Propylenpolymere B einen Restaschegehalt von ≤70 ppm, vorzugsweise ≤50 ppm, hat.

5. Verfahren nach einem oder mehreren der Ansprüche 1 bis 4, dadurch gekennzeichnet, daß das Propylenpolymere B einen Chlorgehalt von ≤50 ppm, vorzugsweise ≤20 ppm, hat.

6. Verfahren nach einem oder mehreren der Ansprüche 1 bis 5, dadurch gekennzeichnet, daß das Propylenpolymere B 90 bis 100 Gew.-% Propyleneinheiten enthält und einen Schmelzpunkt von 130°C oder höher und einen Schmelzflußindex von 0,5 bis 10 g/10 min hat.

7. Verfahren nach einem oder mehreren der Ansprüche 1 bis 6, dadurch gekennzeichnet, daß das Propylenpolymere B ein mittleres Molekulargewicht $M_w$ im Bereich von 150 000 bis 400 000 hat und $M_w/M_n$ im Bereich von 2 bis 15 liegt.

8. Verfahren nach einem oder mehreren der Ansprüche 1 bis 7, dadurch gekennzeichnet, daß dem Propylenpolymeren B Stabilisatoren und/oder Neutralisationsmittel zugesetzt sind.

9. Verfahren nach einem oder mehreren der Ansprüche 1 bis 8, dadurch gekennzeichnet, daß das Propylenpolymere B kein Antistatikum und kein Gleitmittel enthält.

10. Verfahren nach einem oder mehreren der Ansprüche 1 bis 9, dadurch gekennzeichnet, daß der Restaschegehalt des Propylenpolymeren oder der Propylenpolymermischung A 50 bis 800 ppm und der Chlorgehalt 20 bis 100 ppm beträgt.

11. Verfahren nach einem oder mehreren der Ansprüchen 1 bis 10, dadurch gekennzeichnet, daß das Propylenpolymere oder der Propylenpolymermischung A 90 bis 100 Gew.-% Propyleneinheiten enthält und einen Schmelzpunkt von 130°C oder höher und einen Schmelzflußindex von 0,3 bis 15 g/10 min besitzt.

12. Verfahren nach einem oder mehreren der Ansprüche 1 bis 11, dadurch gekennzeichnet, daß das Propylenpolymere oder der Propylenpolymermischung A ein mittleres Molekulargewicht $M_w$ von 150 000 bis 400 000 besitzt und $M_w/M_n$ 2 bis 15 beträgt.

13. Verfahren nach einem oder mehreren der Ansprüche 1 bis 12, dadurch gekennzeichnet, daß das Propylenpolymere oder der Propylenpolymermischung A peroxidisch abgebaut ist und der Abbaufaktor 3 bis 15 beträgt.

**14.** Verfahren nach einem oder mehreren der Ansprüche 1 bis 13, dadurch gekennzeichnet, daß dem Propylenpolymeren oder der Propylenpolymermischung A Neutralisationsmittel und/oder Stabilisatoren zugesetzt ist/sind.

**15.** Verfahren nach einem oder mehreren der Ansprüche 1 bis 14, dadurch gekennzeichnet, daß sich die Schmelzpunkte des Propylenpolymeren B und A um nicht mehr als 15°C, vorzugsweise um nicht mehr als 10°C, voneinander unterscheiden.

**16.** Verfahren nach einem oder mehreren der Ansprüche 1 bis 15, dadurch gekennzeichnet, daß der Schmelzflußindex des Propylenpolymeren oder der Propylenpolymermischung A maximal das dreifache des Schmelzflußindex des Propylenpolymers B beträgt.

**17.** Verfahren nach einem oder mehreren der Ansprüche 1 bis 16, dadurch gekennzeichnet, daß die Polypropylenfolie eine weitere Schicht aufweist.

**18.** Verfahren nach einem oder mehreren der Ansprüche 1 bis 17, dadurch gekennzeichnet, daß der Randbereich der Folie, welcher in Verfahrensschritt 3 abgeschnitten wird, während der Herstellung 300 mm, vorzugsweise 100 bis 200 mm, beträgt.

**19.** Verfahren nach einem oder mehreren der Ansprüche 1 bis 18, dadurch gekennzeichnet, daß der Rand im wesentlichen nicht in Querrichtung orientiert wird.

**20.** Verfahren nach einem oder mehreren der Ansprüche 1 bis 19, dadurch gekennzeichnet, daß der Rand 20 bis 100 $\mu$m, vorzugsweise 20 bis 50 $\mu$m, dick ist.

**21.** Verfahren nach einem oder mehreren der Ansprüche 1 bis 20, dadurch gekennzeichnet, daß der abgeschnittene Säumstreifen zu mindestens 30 Gew.-%, vorzugsweise 50 bis 100 Gew.-%, des Propylenpolymeren oder der Propylenpolymermischung A enthält.

**22.** Verfahren nach einem oder mehreren der Ansprüche 1 bis 21, dadurch gekennzeichnet, daß die Führung der Polymerenschmelzen mit Hilfe einer um 90° gedrehten Coextrusionsdüse erfolgt.

**23.** Verfahren nach einem oder mehreren der Ansprüche 1 bis 22, dadurch gekennzeichnet, daß die Polymerenschmelze B durch eine Öhrchendüse geführt wird und die Polymerenschmelze oder der Propylenpolymermischung A seitlich eingespritzt wird.

**Claims**

**1.** A process for the production of biaxially oriented polypropylene films which comprise at least one layer, in which a propylene polymer B is heated in an extruder and the melt of the propylene polymer B is extruded through a flat sheet die and the melt emerging from the flat sheet die is taken off on one or more rolls and is solidified to give a prefilm and this prefilm is stretched in the longitudinal and transverse direction, characterised in that

1. a propylene polymer or a propylene polymer mixture A is heated and melted in a second extruder, and
2. the melt of the propylene polymer or of the propylene polymer mixture A is fed to the two sides of the propylene polymer melt B in such a way that the two melts are extruded together and simultaneously through the flat sheet die, and the propylene polymer or the propylene polymer mixture A forms the edge region of the film during the production process, and
3. the edge regions comprising the propylene polymer or the propylene polymer mixture A are cut off after the longitudinal and transverse stretching of the film.

**2.** A process as claimed in claim 1, characterised in that the propylene polymer B and the propylene polymer or the propylene polymer mixture A differ with regard to their residual ash content.

**3.** A process as claimed in claim 1 and/or claim 2, characterised in that the residual ash content of the propylene polymer or of the propylene polymer mixture A is at least twice as great, preferably at least three times as great, as the residual ash content of the propylene polymer B.

**4.** A process as claimed in one or more of claims 1 to 3, characterised in that the propylene polymer B has a residual ash content of ≤ 70 ppm, preferably ≤ 50 ppm.

5.  A process as claimed in one or more of claims 1 to 4, characterised in that the propylene polymer B has a chlorine content of ≤ 50 ppm, preferably ≤ 20 ppm.

6.  A process as claimed in one or more of claims 1 to 5, characterised in that the propylene polymer B contains from 90 to 100% by weight of propylene units and has a melting point of 130°C or higher and a melt flow index of from 0.5 to 10 g/10 min.

7.  A process as claimed in one or more of claims 1 to 6, characterised in that the propylene polymer B has an average molecular weight $M_w$ in the range from 150,000 to 400,000 and $M_w/M_n$ lies in the range from 2 to 15.

8.  A process as claimed in one or more of claims 1 to 7, characterised in that stabilisers and/or neutralising agents are added to the propylene polymer B.

9.  A process as claimed in one or more of claims 1 to 8, characterised in that the propylene polymer B contains no antistatic agent and no lubricant.

10. A process as claimed in one or more of claims 1 to 9, characterised in that the residual ash content of the propylene polymer or of the propylene polymer mixture A is from 50 to 800 ppm and the chlorine content is from 20 to 100 ppm.

11. A process as claimed in one or more of claims 1 to 10, characterised in that the propylene polymer or the propylene polymer mixture A contains from 90 to 100% by weight of propylene units and has a melting point of 130°C or higher and a melt flow index of from 0.3 to 15 g/10 min.

12. A process as claimed in one or more of claims 1 to 11, characterised in that the propylene polymer or the propylene polymer mixture A has an average molecular weight $M_w$ of from 150,000 to 400,000 and $M_w/M_n$ of from 2 to 15.

13. A process as claimed in one or more of claims 1 to 12, characterised in that the propylene polymer or the propylene polymer mixture A is peroxidically degraded and the degradation factor is from 3 to 15.

14. A process as claimed in one or more of claims 1 to 13, characterised in that a neutralising agent or agents and/or a stabiliser or stabilisers is/are added to the propylene polymer or propylene polymer mixture A.

15. A process as claimed in one or more of claims 1 to 14, characterised in that the melting points of the propylene polymers B and A differ from one another by not more than 15°C, preferably by not more than 10°C.

16. A process as claimed in one or more of claims 1 to 15, characterised in that the melt flow index of the propylene polymer or of the propylene polymer mixture A is not more than three times the melt flow index of the propylene polymer B.

17. A process as claimed in one or more of claims 1 to 16, characterised in that the polypropylene film has a further layer.

18. A process according to one or more of claims 1 to 17, characterised in that the edge region of the film which is cut off in process step 3 is 300 mm, preferably from 100 to 200 mm, during the production.

19. A process according to one or more of claims 1 to 18, characterised in that the edge is essentially not oriented in the transverse direction.

20. A process as claimed in one or more of claims 1 to 19, characterised in that the edge is from 20 to 100 μm, preferably from 20 to 50 μm, thick.

21. A process as claimed in one or more of claims 1 to 20, characterised in that the cut off edge contains at least 30% by weight, preferably from 50 to 100% by weight, of the propylene polymer or of the propylene polymer mixture A.

22. A process as claimed in one or more of claims 1 to 21, characterised in that the polymer melts are fed with the aid of a coextrusion die rotated through 90°C.

23. A process as claimed in one or more of claims 1 to 22, characterised in that the polymer melt B is fed through an eyelet die and the polymer melt or of the propylene polymer mixture A is injected laterally.

## Revendications

1. Procédé pour la fabrication de feuilles en polypropylène soumises à une orientation biaxe, qui comprennent au moins une couche, dans lequel on chauffe un polymère de propylène a dans une extrudeuse et on extrude la masse fondue du polymère de propylène B à travers une filière pour feuille et on tend la masse fondue s'évacuant de la filière pour feuille, sur un ou plusieurs rouleaux, et on la durcit pour obtenir une feuille préliminaire et on soumet cette feuille préliminaire à un étirage en direction longitudinale et à un étirage en direction transversale, caractérisé en ce que

   1. dans une seconde extrudeuse, on réchauffe et on porte à fusion un polymère de propylène ou un mélange de polymères de propylène A et,
   2. on guide la masse fondue du polymère de propylène ou du mélange de polymères de propylène A sur les deux côtés de la masse fondue de polymère de propylène B de telle sorte que les deux masses fondues sont extrudées de manière conjointe et de manière simultanée à travers la filière pour feuille et de telle sorte que le polymère de propylène ou le mélange de polymères de propylène A forme la zone marginale de la feuille au cours du procédé de fabrication, et
   3. on découpe les zones marginales constituées par le polymère de propylène ou par le mélange de polymères de propylène A après avoir soumis la feuille à un étirage en direction longitudinale et à un étirage en direction transversale.

2. Procédé selon la revendication 1, caractérisé en ce que le polymère de propylène B et le polymère de propylène ou le mélange de polymères de propylène A sont différents en ce qui concerne leur teneur résiduelle en cendres.

3. Procédé selon les revendications 1 et/ou 2, caractérisé en ce que la teneur résiduelle en cendres du polymère de propylène ou du mélange de polymères de propylène A correspond au moins au double, de préférence au moins au triple de la teneur résiduelle en cendres du polymère de propylène B.

4. Procédé selon une ou plusieurs des revendications 1 à 3, caractérisé en ce que le polymère de propylène B possède une teneur résiduelle en cendres $\leq$ 70 ppm, de préférence $\leq$ 50 ppm.

5. Procédé selon une ou plusieurs des revendications 1 à 4, caractérisé en ce que le polymère de propylène B possède une teneur en chlore $\leq$ 50 ppm, de préférence $\leq$ 20 ppm.

6. Procédé selon une ou plusieurs des revendications 1 à 5, caractérisé en ce que le polymère de propylène B contient des unités de propylène à concurrence de 90 à 100% en poids et possède un point de fusion de 130°C ou plus, ainsi qu'un indice de fluidité à chaud de 0,5 à 10 g/10 min.

7. Procédé selon une ou plusieurs des revendications 1 à 6, caractérisé en ce que le polymère de propylène B possède un poids moléculaire moyen $M_w$ dans le domaine de 150.000 à 400.000 et le rapport $M_w/M_n$ se situe dans le domaine de 2 à 15.

8. Procédé selon une ou plusieurs des revendications 1 à 7, caractérisé en ce qu'on ajoute au polymère de propylène B, des stabilisateurs et/ou des agents de neutralisation.

9. Procédé selon une ou plusieurs des revendications 1 à 8, caractérisé en ce que le polymère de propylène B ne contient aucun agent antistatique et aucun agent de glissement.

10. Procédé selon une ou plusieurs des revendications 1 à 9, caractérisé en ce que la teneur résiduelle en cendres du polymère de propylène ou du mélange de polymères de propylène A s'élève de 50 à 800 ppm et sa teneur en chlore s'élève de 20 à 100 ppm.

11. Procédé selon une ou plusieurs des revendications 1 à 10, caractérisé en ce que le polymère de propylène ou le mélange de polymères de propylène A contient des unités de propylène à concurrence de 90 à 100% en poids et possède un point de fusion de 130°C ou plus, ainsi qu'un indice de fluidité à chaud de 0,3 à 15 g/10 min.

**12.** Procédé selon une ou plusieurs des revendications 1 à 11, caractérisé en ce que le polymère de propylène ou le mélange de polymères de propylène A possède un poids moléculaire moyen $M_w$ de 150.000 à 400.000 et le rapport $M_w/M_n$ s'élève de 2 à 15.

**13.** Procédé selon une ou plusieurs des revendications 1 à 12, caractérisé en ce qu'on décompose, à l'aide d'un peroxyde, le polymère de propylène ou le mélange de polymères de propylène A, le facteur de décomposition s'élevant de 3 à 15.

**14.** Procédé selon une ou plusieurs des revendications 1 à 13, caractérisé en ce qu'on ajoute au polymère de propylène ou au mélange de polymères de propylène A, des agents de neutralisation et/ou des stabilisateurs.

**15.** Procédé selon une ou plusieurs des revendications 1 à 14, caractérisé en ce que la différence entre les points de fusion des polymères de propylène B et A n'est pas supérieure à 15°C, de préférence n'est pas supérieure à 10°C.

**16.** Procédé selon une ou plusieurs des revendications 1 à 15, caractérisé en ce que l'indice de fluidité à chaud du polymère de propylène ou du mélange de polymères de propylène A représente au maximum le triple de l'indice de fluidité à chaud du polymère de propylène B.

**17.** Procédé selon une ou plusieurs des revendications 1 à 16, caractérisé en ce que la feuille en polypropylène présente une couche supplémentaire.

**18.** Procédé selon une ou plusieurs des revendications 1 à 17, caractérisé en ce que la zone marginale de la feuille, qui a été découpée dans l'étape opératoire 3, s'élève à 300 mm, de préférence de 100 à 200 mm au cours de la fabrication.

**19.** Procédé selon une ou plusieurs des revendications 1 à 18, caractérisé en ce que le bord n'est essentiellement pas soumis à une orientation en direction transversale.

**20.** Procédé selon une ou plusieurs des revendications 1 à 19, caractérisé en ce que le bord possède une. épaisseur de 20 à 100 $\mu$m, de préférence de 20 à 50 $\mu$m.

**21.** Procédé selon une ou plusieurs des revendications 1 à 20, caractérisé en ce que la bande marginale à l'état découpé contient le polymère de propylène ou le mélange de polymères de propylène A jusqu'à concurrence d'au moins 30% en poids, de préférence de 50 à 100% en poids.

**22.** Procédé selon une ou plusieurs des revendications 1 à 21, caractérisé en ce que le guidage des masses fondues de polymères a lieu à l'aide d'une filière de coextrusion soumise à une rotation de 90°.

**23.** Procédé selon une ou plusieurs des revendications 1 à 22, caractérisé en ce que la masse fondue de polymère B est guidée à travers une filière en forme de petit chas et la masse fondue de polymère ou le mélange de polymères de propylène A est introduit latéralement par injection.

Fig. 1

Fig. 2

14

# Fig. 3

B → EXTR.1

EXTR.2 → A

EXTR.2 ← A

6

16

A    A

B

10

A ;12    B ;14    A ;12

EXTR.1

B

EXTR.2

A

B

EXTR.2

6

16

8

10

A;12

B;14

A;12

**Fig. 3a**

EP 0 740 993 B1

Fig. 4·B

Fig. 4·A